(19) Europäisches Patentamt / European Patent Office / Office européen des brevets

(11) **EP 3 069 849 A1**

(12) **EUROPEAN PATENT APPLICATION**
published in accordance with Art. 153(4) EPC

(43) Date of publication:
**21.09.2016 Bulletin 2016/38**

(21) Application number: **14862258.2**

(22) Date of filing: **14.05.2014**

(51) Int Cl.:
**B29C 55/14** (2006.01)   **C08J 5/18** (2006.01)
**B29K 67/00** (2006.01)   **B29L 7/00** (2006.01)
**B29L 9/00** (2006.01)

(86) International application number:
**PCT/JP2014/062839**

(87) International publication number:
**WO 2015/072163 (21.05.2015 Gazette 2015/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.11.2013 JP 2013235370**
**13.11.2013 JP 2013235371**

(71) Applicant: **Toyobo Co., Ltd.**
**Osaka-shi**
**Osaka 530-8230 (JP)**

(72) Inventors:
• **GOTO, Takamichi**
**Inuyama-shi**
**Aichi 484-8508 (JP)**
• **NAKAYA, Tadashi**
**Otsu-shi**
**Shiga 520-0292 (JP)**
• **IKEHATA, Yoshitomo**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY STRETCHED POLYESTER FILM AND METHOD FOR PRODUCING SAME**

(57) The present invention relate to a biaxially stretched polybutylene terephthalate film comprising a polyester resin composition containing 60 % by mass or more of polybutylene terephthalate, wherein a peak temperature of tan δ as determined by the dynamic viscoelasticity measurement at 10 Hz of measurement frequency is 60 °C or more and 100 °C or less in both the MD direction and the TD direction, and a peak value of tan δ is 0.080 or more and 0.15 or less in both the MD direction and the TD direction. The biaxially stretched polybutylene terephthalate film of the present invention can be suitably used for converting films, films for food package such as a retort pouch package and a moisture food package, draw films and the like.

EP 3 069 849 A1

**Description**

TECHNICAL FIELD

The present invention relates to a biaxially stretched polyester film, specifically a biaxially stretched polybutylene terephthalate film having excellent moisture proof property, pinhole resistance, and bag breakage resistance, and suitable applications such as a retort pouch package and a moisture food package, and a production method thereof.

In addition, the present invention relates to a biaxially stretched polyester film, specifically a biaxially stretched polybutylene terephthalate film having excellent balance of impact resistance, flexibility, and mechanical strength, and suitable applications for which nylon films and other flexible films have conventionally been used, and a production method thereof.

BACKGROUND ART

Polybutylene terephthalate (hereinafter, referred to as PBT) in which is excellent in the gas barrier property and chemical resistance in addition to mechanical characteristic and impact resistance has conventionally been used as an engineering plastic and particularly as a useful material owing to good productivity attributed to the crystallization speed. In addition, PBT has been studied for application to various film fields such as converting films, films for food package, and drawing films in the viewpoint of using its characteristics.

Regarding an un-stretched PBT film, Patent Document 1 discloses a technique known for keeping piercing displacement within a specified range to provide excellent processing suitability for uses to carry out drawing formation, such as an exterior material for lithium ion batteries.

However, such a conventional technique has a problem that stretch of PBT is weak since PBT is not stretched and the intrinsic characteristics of PBT are not sufficiently extracted in terms of mechanical characteristic and impact resistance.

In addition, PBT has high crystallization speed and its biaxial stretch has been considered to be difficult. This is because crystallization occurs due to orientation in stretching process and thus stretching becomes difficult.

Accordingly, in order to advantageously utilize the intrinsic characteristics of PBT, investigations for the purpose of enhancing plane orientation by biaxial stretch and improving mechanical characteristic and impact resistance of the film have been made for past 40 years or more. Some of past investigations on a PBT film is examined as follows.

Patent Document 2 discloses a technique to prepare a polybutylene terephthalate film having excellent mechanical property by simultaneously biaxially stretching PBT having the intrinsic viscosity of 0.7 dl/g or more by using a tenter device.

Patent Document 3 also discloses a technique to prepare a polybutylene terephthalate film having the plane orientation coefficient of 0.07 to 0.18 by stretching PBT having the intrinsic viscosity of 0.7 dl/g or more in a raw material by a tubular simultaneous biaxial stretch method.

Further, Patent Document 4 discloses a technique known for producing a biaxially stretched polybutylene terephthalate film having slight anisotropy and excellent mechanical properties and dimensional stability by controlling the crystallization of PBT from a rapid cooling of un-stretched sheet extruded with circular die, and producing a PBT film by employing a tubular and simultaneous biaxial stretch method.

However, there is a problem that the resulting film has insufficient piercing strength and impact resistance because the accuracy of the thickness is poor due to the simulteneous biaxial stretch method and the plane orientation coefficient is not improved when the simultaneous biaxial stretch method can be widely applied to a resin having high crystallization speed such as PBT. In addition, there is a problem that, in the tubular and simultaneous biaxial stretch method, the speed for film formation is not improved and the productivity becomes insufficient due to its film formation method.

On the other hand, other biaxial stretch method includes a sequential biaxial stretch method as a method for forming the film having higher speed in the film formation and more excellent productivity than those of a tubular simultaneous biaxial stretch method. However, in the case where a resin having high speed in the crystallization such as PBT is stretched in one direction, the molecular chain is oriented in the same direction as a stretched direction, and then this orientation is sequentially relaxed when the film is stretched in a direction perpendicular to the first stretch direction, so that the necking can be unavoidable. Thus, since it is necessary to stretch the film to the limit so as to eliminate the necking, there is a problem that breakage of the film easily occurs.

In addition, as indicated in Patent Document 5, in the method for forming the film by stretching an un-stretched sheet in which a resin is extruded with T die, and the resin is casted on the cooling roll, it is necessary to improve the adhesion between a melting material like the film and the surface of the cooling rotation drum in order to improve the defects on the surface of the film and the uniformity of the thickness of the film. By these reasons, it is more difficult to prepare the biaxially stretched PBT film by a sequential biaxial stretch method, compared with the tubular simultaneous biaxial stretch method.

Further, there is a technique known for producing a biaxially stretched PBT film by extruding PBT with T die, contacting extruded PBT with chill roll, stretching in the TD direction at a stretch ratio of 3.5 times or lower and successively in the MD direction at a deformation speed of 100000%/min or more to produce an evenly stretched film with no thickness unevenness (see, for example, Patent Document 5). However, as being indicated from the results of Examples, such a conventional technique has a problem that a film produced by the technique has low elongation and is inferior in transparency and dimensional stability because of high deformation speed only in the MD direction and therefore fails to be in good balance between the MD direction and the TD direction.

As mentioned above, conventional biaxial stretch polybutylene terephthalate films did not have sufficient properties in moisture proof property, pinhole resistance, and bag breakage resistance for a package material. Here, "moisture proof property" in the present invention means a property having lower water absorbency than that of nylon and a similar moisture proof property to polyethylene terephthalate.

On the other hand, these techniques do not make use of the advantages of the sequential biaxial stretch method due to lower stretching ratio and insufficient strength. In addition, there are no concrete disclosures of the improvement of the adhesion between the melting material like film and the surface of the cooling rotation drum, and the improvement of the speed in the film formation is limited, so that there is still issue in the viewpoint of the film productivity.

As a method for improving the adhesion between a sheet-like material extruded with T die and the surface of the cooling rotation roll, there is a method (a electrostatic adhesion casting method) for setting a wire-like electrodes between extruder nozzle and the cooling rotation drum to apply high voltage, depositing the static electricity on the unsolidified sheet-like material, and closely contacting a sheet with the surface of the cooling rotation roll to rapidly cool the sheet.

In order to effectively carry out the electrostatic adhesion casting method, it is necessary to improve the electrostatic adhesion between the sheet-like material and the surface of the cooling rotation drum and it is important to deposit much charge amount on the sheet-like material. In order to deposit much charge amount, it is effective to decrease the specific resistance from the modification of polyester, and considerable efforts are being made to decrease the specific resistance.

As a method for decreasing the specific resistance of the polyester, for example, Patent Document 6 discloses a method for decreasing the specific resistance by adding a magnesium compound and a phosphorus compound such that the ratio of magnesium atom and phosphorus atom is adjusted within a given range at the time of the preparation of polyethylene terephthalate (PET). In addition, Patent Document 6 also discloses that foreign materials from catalyst are decreased and the quality of the film is improved by limiting the timing of adding a magnesium compound, a sodium compound, and a phosphorus compound.

On the other hand, PBT has insufficient adhesion to the cooling rotation roll due to higher melt viscosity than that of PET. In addition, it is essential to improve electrostatic adhesion in the viewpoint of the productivity of the film because, generally, the metal catalyst used in the preparation of PBT is only titanium compound in a small amount, and specific resistance becomes high.

Patent Document 7 discloses a polyester composition for food packaging film having a melt specific resistance of 1.0 x $10^7$ Ω·cm or less by containing a magnesium compound, a potassium compound, and a phosphorus compound having a given structure and adjusting each of magnesium, potassium, and phosphorus in a given amount. This technique has advantages such as the small amount of a minute foreign substances, the property of applying static electricity on the sheet, and the property of retaining aroma.

However, in Patent Document 7, there is no concrete disclosure of PBT having high melt viscosity and the insufficient adhesion to the cooling rotation roll, and it is necessary for metal atom in a large amount to decrease the melt specific resistance up to 1.0 x $10^7$ Ω·cm, so that there is a problem to decrease the appearance level of the film from the coloration.

PRIOR ART DOCUMENTS

PATENT DOCUMENTS

Patent Document 1: JP-A-2012-77292
Patent Document 2: JP-A-Hei-2-16029
Patent Document 3: JP-A-Hei-5-200860
Patent Document 4: JP-A-2012-146636
Patent Document 5: JP-A-Sho-51-146572
Patent Document 6: JP-A-Sho-59-64628

Patent Document 7: JP-B-4734973

SUMMERY OF THE INVENTION

PROBLEMS TO BE SOLVED BY THE INVENTION

The first problem of the present invention is to provide a biaxially stretched polyester film having excellent moisture proof property, pinhole resistance, and bag breakage resistance, and suitable applications such as a retort pouch package and a moisture food package, and a method for preparing the same.

The second problem of the present invention is to provide a biaxially stretched polybutylene terephthalate (PBT) film having excellent balance of the impact resistance (for example, bag breakage resistance), the flexibility (for example, pinhole resistance), and the mechanical strength (for example, impact strength), and suitable applications for which nylon films and other flexible films have been used conventionally.

In addition, the third problem of the present invention is to provide a method for preparing a biaxially stretched polybutylene terephthalate film without impairing the appearance level of the film even when PBT having high melt viscosity is used and the film formation speed becomes high.

SOLUTIONS TO THE PROBLEMS

The present inventors have found that the problem is solved by limiting a peak value and a peak temperature of tan $\delta$ as determined by the dynamic viscoelasticity measurement of the biaxialy stretched polybutylene terephthalate film to a given range, and improving the impact strength, the moisture proof property, the pinhole resistance and the bag breakage resistance, to complete the present invention.

Concretely, as means for adjusting the peak value and the peak temperature of tan $\delta$ in a given range, a means of multi-layering the composition using a given static mixer at the time of melting of a polyester resin composition containing polybutylene terephthalate, and a means of adjusting the temperature of chill roll into a given range can be adopted. According to these means, the decrease of the crystallization degree and the miniaturization of the crystallization size of polybutylene terephthalate are realized, and the impact strength, the moisture proof property, and the pinhole resistance, and the bag breakage resistance are improved.

Further, the present inventors have found that the impact strength, the moisture proof property, and the pinhole resistance, and the bag breakage resistance are improved by adjusting the peak value and the peak temperature of tan $\delta$ as determined by the dynamic viscoelasticity measurement of the biaxial stretch polybutylene terephthalate film and the melt specific resistance of the film in a given range.

Concretely, as a mean of adjusting the melt specific resistance of the film in a given range, a mean of mixing an alkaline earth metal compound (alkaline earth metal atom) and a phosphorus compound (phosphorus atom) in a given ratio can be adopted. By this mean, the appearance level of the film is not impaired even if the specific resistance is decreased, and the speed for film formation becomes high.

In other words, the present invention is a biaxially stretched polybutylene terephthalate film comprising a polyester resin composition containing 60 % by mass or more of polybutylene terephthalate, wherein a peak temperature of tan $\delta$ as determined by the dynamic viscoelasticity measurement at 10 Hz of measurement frequency is 60 °C or more and 100 °C or less in both the MD direction and the TD direction, and the peak value of tan $\delta$ is 0.080 or more and 0.15 or less in both the MD direction and the TD direction.

Also, the present invention is a biaxially stretched polybutylene terephthalate film comprising a polyester resin composition containing 60 % by mass or more of polybutylene terephthalate, wherein a melt specific resistance of the film is 0.10 x $10^8$ $\Omega \cdot$cm or more and 1.0 x $10^8$ $\Omega \cdot$cm or less, a peak temperature of tan $\delta$ as determined by the dynamic viscoelasticity measurement at 10 Hz of measurement frequency is 60 °C or more and 100 °C or less in both the MD direction and the TD direction, and the peak value of tan $\delta$ is 0.080 or more and 0.15 or less in both the MD direction and the TD direction.

In such a case, it is preferable that the refractive index of the film in the thickness direction is 1.490 or more and less than 1.540, and the plane orientation coefficient is 0.128 or more and less than 0.150.

In such a case, it is preferable that the refractive index of the film in the thickness direction is 1.490 or more and less than 1.510, and the plane orientation coefficient is 0.130 or more and less than 0.150.

In such a case, it is preferable that the thermal shrinkage of the film at 150 °C in the MD direction and the TD direction is 7.2 or less.

In such a case, it is preferable that the polyester resin composition of the present invention comprises a polyester resin other than polybutylene terephthalate.

In such a case, it is preferable that the intrinsic viscosity of the film is 0.80 dl/g or more and less than 1.2 dl/g.

In such a case, it is preferable that the biaxially stretched polybutylene terephthalate film comprises an alkaline earth metal compound and a phosphorus compound, and the mass ratio (M2/P) of alkaline earth metal atom (M2) to phosphorus atom (P) is 1.2 or more and 5.0 or less.

In such a case, it is preferable that the film is obtained by sequentially biaxially stretching an un-stretched sheet.

In such a case, it is preferable that the film is obtained by multi-layering the polyester resin composition at 60 layers or more to cast the composition having multilayers as a sheet, and biaxially stretching a resultant un-stretched sheet.

In such a case, it is preferable that the film is obtained by sequentially biaxially stretching an un-stretched sheet.

EFFECT OF THE INVENTION

According to the present invention, the biaxially stretched polybutylene terephthalate film having excellent moisture proof property, pinhole resistance, and bag breakage resistance, and suitable applications such as a retort pouch package and a moisture food package, can be provided.

In addition, according to the present invention, the biaxially stretched polybutylene terephthalate film having suitable applications for which nylon films and other flexible films have conventionally been used, and excellent balance of the impact resistance, the flexibility, and the mechanical strength, without impairing the appearance level of the film even when the film formation speed becomes high.

MODE FOR CARRYING OUT THE INVENTION

Hereinafter, the present invention will be described in detail.

(Biaxially stretched polybutylene terephthalate film)

A polyester resin composition to be used in the present invention contains PBT as a main constituent component. The content of PBT is preferably not less than 60 % by mass, more preferably not less than 70 % by mass, particularly preferably not less than 75 % by mass, and most preferably not less than 80 % by mass per 100 % by mass of the polyester resin composition. If the content is less than 60 % by mass, the impact resistance and the pinhole resistance are lowered and film characteristics become insufficient.

The content of PBT is preferably not more than 100 % by mass, more preferably not more than 99.9 % by mass or not more than 99.5 % by mass, and even preferably not more than 99 % by mass or not more than 98 % by mass per 100 % by mass of the polyester resin composition.

PBT to be used as a main constituent component of the polyester resin composition is not particularly limited as long as PBT is obtained by reacting a dicarboxylic acid and a glycol component. As a dicarboxylic acid component, terephthalic acid is used in an amount of preferably not less than 90 mol%, more preferably not less than 95 mol%, furthermore preferably not less than 98 mol%, and most preferably 100 mol%. As a glycol component, 1,4-butanediol is used in an amount of preferably not less than 90 mol%, more preferably not less than 95 mol%, and furthermore preferably not less than 97 mol%. It is most preferable to contain nothing other than byproducts produced by ether linkage of 1,4-butanediol at the time of polymerization.

The polyester resin composition to be used in the present invention can contain a polyester resin other than PBT (a different polyester resin from PBT) for the purpose of adjusting the film formability at the time of biaxial stretch and the mechanical characteristic of a film to be obtained.

Examples of the polyester resin other than PBT may include polyester resins such as polyethylene terephthalate (PET), polyethylene naphthalate (PEN), polybutylene naphthalate (PBN), polypropylene terephthalate (PPT) etc., as well as PBT resins copolymerized with dicarboxylic acids such as isophthalic acid, orthophthalic acid, naphthalenedicarboxylic acid, biphenyldicarboxylic acid, cyclohexanedicarboxylic acid, adipic acid, azelaic acid, sebacic acid, etc., and PBT resins copolymerized with diol components such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, polycarbonate diol, etc. These may be used individually or in the combination of two or more kinds. Among these, polyethylene terephthalate (PET), and polybutylene adipate butylene terephthalate copolymer can be used suitably.

The added amount of polyester resins other than these PBTs is preferably not more than 40 % by mass, more preferably not more than 30 % by mass, even preferably not more than 20 % by mass per 100 % by mass of the polyester resin composition. If the added amount of the polyester resin other than PBT exceeds 40 % by mass, there are problems that the mechanical characteristic as PBT is deteriorated, the impact resistance and the bag breakage resistance may become insufficient, and transparency is lowered and the like.

The added amount of the polyester resin other than PBT is, for example, 0 % by mass, preferably not less than 0.1 % by mass, not less than 0.5 % by mass, not less than 0.7 % by mass, not less than 1 % by mass, not less than 2 % by mass, or not less than 3 % by mass per 100 % by mass of the polyester resin. In the case of using polyester resins other than PBT in two or more resins (for example, PET (A) and polybutylene adipate butylene terephthalate copolymer (B)), the mass ratio of (A) to (B) [(A)/(B)] is preferably 5/1 to 1/5, and more preferably 4/1 to 1/4.

In the present invention, a melt specific resistance of the biaxially stretched polybutylene terephthalate film is 0.10 x $10^8$ Ω·cm or more and $1.0 \times 10^8$ Ω·cm or less. For this purpose, it is necessary that the polyester resin composition to be used is adjusted to have the melt specific resistance at 265 °C by a measurement method described below of $1.0 \times 10^8$ Ω·cm or less, preferably 0.5 x $10^8$ Ω·cm or less, and more preferably $0.25 \times 10^8$ Ω·cm or less. When the polyester resin having the melt specific resistance at 265 °C of more than $1.0 \times 10^8$ Ω·cm is made to contact to a cooling drum in the above-mentioned production condition of avoiding the abnormal electric discharge, the sheet is cooled in the state where air is locally incorporated between the molten resin sheet and the cooling drum, so that the pinner bubbles are unfavorably generated on the sheet surface. Further, since it is necessary to lower the production speed for suppressing the pinner bubble generation to an extent that the discharged molten resin can sufficiently contact to the cooling drum, the production cost is increased.

The melt specific resistance of the biaxially stretched polybutylene terephthalate film is 0.10 x $10^8$ Ω·cm or more, preferably 0.11 x $10^8$ Ω·cm or more, and more preferably $0.12 \times 10^8$ Ω·cm or more. When the melt specific resistance is lower than the above values, the amount of a metal compound to be added becomes large, and the coloration of the film is occurred in some cases. In addition, static electricity occurs, and the handling of the film is deteriorated in some cases.

A melt specific resistance of the film can be measured as set forth below. A pair of electrode plates are inserted in a sample (film) molten at a temperature of 265 °C and voltage of 120 V is applied. The electric current at that time is measured and the melt specific resistance Si (Ω·cm) is calculated according to the following expression:

$$Si = (A/I) \times (V/io)$$

wherein "A" represents surface area of the electrode ($cm^2$); "I" represents interval between the electrodes (cm); "V" represents voltage (V); and "io" represents electric current (A).

In order to control the melt specific resistance within the above-mentioned range for the polyester resin composition in the invention, an alkaline earth metal compound and a phosphorus compound may be added to the resin (for example PET). As a method for adding them, there may be a method of mixing a polyester resin containing an alkaline earth metal compound and a phosphorus compound as a polyester resin other than PBT with PBT and the like. An alkaline earth metal atom (M2) in the alkaline earth metal compound has an effect of lowering the melt specific resistance of a resin. An alkaline earth metal compound is used, in general, as a catalyst in the case of generating esters from polycarboxylic acids and polyhydric alcohols, and positive addition of the compound in an amount beyond the necessity as a catalyst makes it possible to exhibit the effect of lowering the melt specific resistance. Specifically, it is recommended to adjust the content of the alkaline earth metal compound to preferably 20 ppm or more, more preferably 22 ppm or more, even preferably 24 ppm or more, even more preferably 50 ppm or more, and particularly preferably 100 ppm or more based on M2 (by mass, the same shall apply hereinafter) . On the other hand, it is recommended to adjust the content of the alkaline earth metal compound to preferably 450 ppm or less, more preferably 400 ppm or less, and even preferably 390 ppm or less based on M2, because use of the compound beyond the above mentioned content cannot cause any positive effect corresponding to the amount and rather, it may result in adverse effects such as foreign material generation and coloration attributed to the compound.

Specific examples of a preferable alkaline earth metal compound include alkaline earth metal hydroxides, aliphatic dicarboxylic acid salts (acetic acid salts and butyric acid salts, preferably acetic acid salts), aromatic dicarboxylic acid salts, and salts of compounds having phenolic hydroxyl groups (salts of phenol). Further, examples of the alkaline earth metal include magnesium, calcium, strontium, and barium (preferably magnesium). More specific examples thereof include magnesium hydroxide, magnesium acetate, calcium acetate, strontium acetate, and barium acetate. Among these, magnesium acetate is preferably used. The above-mentioned alkaline earth metal compounds may be used alone or two or more kinds may be used in combination. Recently, there is a definition of alkaline earth metal which excludes magnesium; however, in the invention, the conventional definition of alkaline earth metals which includes magnesium is employed. In other words, elements of Group IIa of a periodic table are employed.

The phosphorus compound by itself has no effect of lowering the melt specific resistance of a film; however, in combination with an alkaline earth metal compound and with an alkaline metal compound described later, the phosphorus compound can contribute to decrease of the melt specific resistance. The reason for that is not clear; however, it is supposed that addition of the phosphorus compound can suppress generation of foreign materials and increase the amount of a charge carrier. It is recommended to adjust the content of the phosphorus compound to preferably 10 ppm or more, more preferably 11 ppm or more, even preferably 12 ppm or more, even more preferably 20 ppm or more, and particularly preferably 50 ppm or more based on phosphorus atom (P) (by mass, the same shall apply hereinafter). If the content of the phosphorus compound is below the above-mentioned range, the effect of lowering the melt specific resistance is insufficient and the amount of the foreign materials generated tends to be increased.

On the other hand, the content of the phosphorus compound is preferably 600 ppm or less, more preferably 550 ppm or less, even preferably 500 ppm or less, even more preferably 400 ppm or less, and particularly preferably 300 ppm or less on the basis of phosphorus atom. When the phosphorus compound is used in the larger amount than the above, effects corresponding to the amount to be used is not obtained, and effects of decreasing the melt specific resistance is saturated.

Examples of the phosphorus compound include phosphoric acids (phosphoric acid, phosphorous acid, hypophosphorus acid, etc.) and esters thereof (alkyl esters, aryl esters, etc.); and also alkyl phosphonic acid, aryl phosphonic acid and esters thereof (alkyl esters, aryl esters, etc.). Examples of a preferable phosphorus compound include phosphoric acid; aliphatic esters of phosphoric acid (phosphoric acid alkyl esters, etc.; e.g., phosphoric acid mono C1-6 alkyl esters such as phosphoric acid monomethyl ester, phosphoric acid monoethyl ester, and phosphoric acid monobutyl ester; phosphoric acid di C1-6 alkyl esters such as phosphoric acid dimethyl ester, phosphoric acid diethyl ester, and phosphoric acid dibutyl ester; phosphoric acid tri C1-6 alkyl esters such as phosphoric acid trimethyl ester, phosphoric acid triethyl ester, and phosphoric acid tributyl ester, etc.); aromatic esters of phosphoric acid (phosphoric acid mono-, di-, or tri-C6-9 aryl esters such as triphenyl phosphate and tricresyl phosphate, etc.); aliphatic esters of phosphorus acid (alkyl esters of phosphorus acid; e.g., mono-, di-, or tri-C1-6 alkyl esters of phosphorus acid such as trimethyl phosphite and tributyl phosphite, etc.); alkyl phosphonates (C1-6 alkyl phosphonates such as methyl phosphonate and ethyl phosphonate, etc.); alkyl phosphonic acid alkyl esters (mono- or di-C1-6 alkyl esters of C1-6 alkyl phosphonic acid, such as dimethyl methylphosphonate and dimethyl ethylphosphonate, etc); arylphosphonic acid alkyl esters (mono- or di-C1-6 alkyl esters of C6-9 arylphosphonic acid, such as dimethyl phenylphosphonate and diethyl phenylphosphonate, etc.); and arylphosphonic acid aryl esters (mono- or di- C6-9 aryl esters of C6-9 arylphosphonic acid, such as diphenyl phenylphosphonate, etc.). Examples of a particularly preferable phosphorus compound include phosphoric acid and trialkyl phosphonate (trimethyl phosphate). These phosphorus compounds may be used alone or two or more kinds may be used in combination.

Further, the film contains the alkaline earth metal compound and the phosphorus compound at a mass ratio (M2/P) of the alkaline earth metal atom (M2) and the phosphorus atom (P) of preferably 1.2 or more and 5.0 or less, more preferably 1.3 or more and 4.5 or less, furthermore preferably 1.4 or more and 4.0 or less. If the M2/P value is less than 1.2, the effect of decreasing the melt specific resistance is considerably lowered. On the other hand, if the M2/P value exceeds 5.0, an adverse effect of promoting foreign material generation or coloring the film becomes more significant rather than the effect of decreasing the melt specific resistance and therefore, it is not preferable.

The electrostatic adhesion method to be employed in the present invention is preferably a method for providing electrostatic charge by a wire-like electrode or a band-like electrode. A-needle-like electrode is not preferred since the directivity of generated electric power from the electrode surface to the molten polyester resin extruded from T die becomes so intense as to easily generate abnormal electric discharge and it results in difficulty of control of the production conditions for preventing consequent sheet breakage and damage of the cooling drum from being generated.

The diameter φ of the wire-like electrode to be used in the invention is preferably 0.05 to 1.0 mm and particularly preferably 0.08 to 0.5 mm. If the diameter φ of the wire-like electrode is smaller than 0.05 mm, the wire-like electrode cannot stand the tensile force applied to the wire-like electrode for preventing the electrode deflection due to resonance or mechanical vibration and the wire may be cut and therefore, it is nor preferable. Further, if the diameter φ is larger than 1.0 mm, excess voltage and electric current are required to efficiently and evenly apply electric charges to the molten resin sheet and abnormal electric discharge tends to be generated extremely easily and therefore, it is not preferable.

The lower limit of the melt temperature of PBT and the polyester resin other than PBT is preferably 200 °C, and more preferably 210 °C. When the melt temperature is less than 200 °C, discharge becomes unstable in some cases. The upper limit of the melt temperature of these resins is preferably 300 °C, more preferably 280 °C, and even preferably 270 °C. When the melt temperature is more than 300 °C, the deterioration of the resin occurs in some cases.

The above-mentioned polyester resin composition may contain conventionally known additives, for example, a lubricant, a stabilizer, a coloring agent, an antioxidant, an anti-static agent, an ultraviolet absorber, etc., as necessary.

As a lubricant, inorganic lubricants such as silica, calcium carbonate, alumina, etc. and also organic lubricants are preferable; silica and calcium carbonate are more preferable; and calcium carbonate is particularly preferable. These lubricants provide transparency and slippage in the film.

The lower limit of the lubricant concentration is preferably 100 ppm, more preferably 200 ppm, even preferably 300 ppm, and even more preferably 400 ppm. If it is less than 100 ppm, slippage may be lowered in some cases. The upper limit of the lubricant concentration is preferably 20000 ppm, more preferably 15000 ppm, even preferably 10000 ppm, and even more preferably 5000 ppm. If it exceeds 20000 ppm, transparency may be lowered in some cases.

The first key point of one example of desirable methods for obtaining a film according to the present invention is such that starting materials (polyester resin composition) of the same composition are multi-layered and cast at the time of casting.

Since PBT has high crystallization speed, crystallization proceeds even at the time of casting. At that time, in the case of casting in a monolayer without layering multi-layers, since there is no barrier which can suppress crystal growth, the crystals are grown to be spherulites with large size. As a result, the obtained un-stretched sheet has high yield stress and is easy to be ruptured at the time of biaxial stretch and also the obtained biaxially stretched film has impaired flexibility and insufficient pinhole resistance and bag breakage resistance.

Meanwhile, the inventors of the present invention have found that the stretching stress of an un-stretched sheet can be lowered and stable biaxial stretch is made possible by layering the same resin in multi-layers.

The reason is supposed so that there is the interface of layers even in the case of the same resin is layered. In the case where a resin is casted at multilayers, polymers itself are hardly intertwined beyond the interface of these layers, and the force of relaxing the intertwined polymers can be decreased. That is, the stress at the time of stretching is decreased. In addition, polymers are hardly intertwined beyond the interface of layers in the stretched film, and the film having more stretchable and flexible property can be obtained.

A practical method for making small size of spherulites or small stretched stress by multi-layering may be carried out using a common multi-layering apparatus (e.g., a multi-layer feed block, a static mixer, a multi-layer multi-manifold, etc.) and may be, for example, a method comprising steps of sending a thermoplastic resin from different channels using two or more extruders and layering the thermoplastic resin in multi-layers using a field block, a static mixer, a multi-manifold die, etc. Additionally, in the case of forming multi-layers of the same composition (a polyester resin composition) just like the case of the present invention, it is also possible to accomplish the aim of the invention by introducing the above-mentioned multi-layering apparatuses in a melt line from an extruder to a die while using only a single extruder.

In the present invention, the static mixer is suitably used in the viewpoint of the economy. The element of the static mixer may be right element or left element. The number of the element is, for example, 1 or more and 50 or less, preferably 2 or more and 40 or less, more preferably 4 or more and 30 or less, and even preferably 6 or more and 25 or less. A resin passing through the static mixer is generally divided into two parts every passing through one element, and the number N of divided resins is indicated as $2^n$ (n represents the number of element). For example, when the number of element is 12, the number N of divided resins represents $2^{12} = 2048$.

Further, the present inventors have found that, in the biaxially stretched film obtained by biaxially stretching an un-stretched sheet in which the same resin (a polyester resin composition) is multi-layered to cast the composition as the un-stretched sheet, the peak temperature of tan $\delta$ as determined by the dynamic viscoelasticity measurement is shifted to high temperature side (60 °C or more and 100 °C or less), and a peak value of tan $\delta$ becomes larger (0.080 or more and 0.15 or less), compared with a biaxially stretched film formed without multi-layering.

Generally, tan $\delta$ represents E" (loss modulus) / E' (storage modulus), while qualitatively, E" represents softness, and E' represents hardness. When E" becomes higher, the softness is exhibited more, and when E' becomes higher, the hardness is exhibited more.

The shift of the peak temperature of tan $\delta$ to higher temperature and the increase of the peak value of tan $\delta$ in the dynamic viscoelasticity measurement means that a film has a structure having the flexibility and the impact absorption, and this results from the decrease of the crystalization degree of the resin and the miniaturization of the crystal size.

Concretely, the decrease of the crystallization degree and the miniaturization of the crystal size of the polybutylene terephthalate film is promoted by multi-layering of the polyester resin composition containing polybutylene terephthalate at the state of melting, regions concerning a molecular motion are increased, so that E'' value is raised, and the peak value of tan $\delta$ is also elevated.

In addition, when the polyester resin composition containing polybutylene terephthalate is multi-layered at the state of melting, entanglement between polymer molecules beyond each layer of the film is relaxed, the polymer molecules are easily moved, so that the peak temperature of tan $\delta$ is increased. In the present invention, when both the peak value and the peak temperature of tan $\delta$ are satisfied within a given range, the flexibility and the impact resistance are improved, so that the pinhole resistance, the bag breakage resistance, and the impact strength are also improved. From these, the biaxial stretched polybutylene terephthalate film obtained by the present invention has excellent flexibility and impact resistance.

The second key point of one example of desirable methods for obtaining a film according to the present invention is such that the crystallization degree of an un-stretched sheet is kept low at the time of casting. The practical method thereof is a casting to a chill roll at a low temperature. Further, it is also possible to increase the cooling efficiency by installing a touch roll for cooling the face which is not to be brought into contact with a chill roll.

The lower limit of the die temperature is preferably 200°C, more preferably 210 °C, even preferably 220 °C, even more preferably 230 °C, and particularly preferably 240 °C. If it is less than the temperature, injection may become unstable and therefore thickness may become uneven in some cases. The upper limit of the die temperature is preferably 320°C, more preferably 315 °C, even preferably 310 °C, even more preferably 305 °C, and particularly preferably 300 °C. If it exceeds the temperature, thickness may become uneven and additionally resin deterioration may be caused and the appearance may become inferior because of staining of die lips in some cases.

The lower limit of the chill roll temperature is preferably -10°C, more preferably -5 °C, and even preferably 0 °C. If it is less than the temperature, the crystallization suppression effect may be saturated in some cases. The upper limit of the chill roll temperature is preferably 20°C, more preferably 19 °C, and even preferably 18 °C. If it exceeds the temperature, the crystallization degree may become so high as to make stretching difficult in some cases. In the case where the chill roll temperature is controlled to be within the above-mentioned range, it is preferable to lower the humidity in the ambient environment close to the chill roll for preventing dew formation.

In the casting, the temperature of the chill roll surface is increased since the resin with high temperature is brought into contact with the surface. Usually, the chill roll is cooled by setting a pipe in the inside and flowing cooling water therein, however, it is necessary to suppress the temperature difference in the width direction of the chill roll surface by reliably keeping a sufficient amount of cooling water, properly adjusting the arrangement of the pipe, carrying out maintenance work for preventing deposition of sludge in the pipe, etc. It has to be careful particularly in the case where cooling is carried out at a low temperature without employing a multi-layering method.

In this case, the thickness of an un-stretched sheet is preferable to be in a range from 15 to 2500 µm.

In casting of melted polyester resin composition into the multi-layer structure, the casting may be carried out in preferably at least 60 layers or more and 4000 layers or less, more preferably 250 layers or more and 3500 layers or less, and even preferably 1000 layers or more and 3000 layers or less. If the number of the layers is small, the spherulite size of the un-stretched sheet becomes large and not only the effect of improving stretchability becomes slight, but also the effect of lowering the yield stress of the obtained biaxially stretched film is lost. In addition, in the case where the multilayer is not formed, the property for forming the film is not favorable in some cases.

Next, a stretching method will be described. A stretching method may be simultaneous biaxial stretching and sequential biaxial stretching and for improving the piercing strength, it is needed to increase the plane orientation coefficient and in this term, sequential biaxial stretching is preferable. The order of the stretching is not particularly limited, and the machine stretch and the transverse stretch in this order is preferable in the viewpoint of the appropriate adjustment of the molecular orientation of the film.

The lower limit of the stretching temperature in the vertical stretching direction or the machine stretching direction (hereinafter, referred to as MD) is preferably 40°C and more preferably 45°C. If it is less than 40°C, rupture may be caused easily in some cases. The upper limit of the stretching temperature in the MD is preferably 100°C and more preferably 95°C. If it exceeds 100°C, no stretch is applied so that mechanical characteristics may be deteriorated in some cases.

The lower limit of the stretching ratio in the MD is preferably 2.5 times, more preferably 3.0 times, and particularly preferably 3.3 times. If it is less than the above-mentioned value, no stretch is applied so that mechanical characteristics and thickness unevenness may be worsened in some cases. The upper limit of the stretching ratio in the MD is preferably 5 times, more preferably 4.5 times, and particularly preferably 4.0 times. If it is exceeds the above-mentioned ratio, the effect of improving mechanical strength and the thickness evenness may be saturated in some cases.

The lower limit of the stretching temperature in the transverse stretching direction (hereinafter, referred to as TD) is preferably 40°C, more preferably 45 °C, and even preferably 50 °C, and even more preferably 55 °C. If it is less than the above-mentioned value, rupture tends to be caused easily in some cases. The upper limit of the stretching temperature in the TD is preferably 100°C, more preferably 95 °C, even preferably 90 °C, and even more preferably 85 °C. If it is exceeds the above-mentioned Temperature, no stretch is applied so that mechanical characteristics may be worsened in some cases.

The lower limit of the stretching ratio in the TD is preferably 2.5 times, more preferably 3.0 times, and particularly preferably 3.3 times. If it is less than the above-mentioned value, no stretch is applied so that mechanical characteristics and thickness unevenness may be worsened in some cases. The upper limit of the stretching ratio in the TD is preferably 5 times, more preferably 4.5 times, and particularly preferably 4.0 times. If it is exceeds the above-mentioned ratio, the effect of improving mechanical strength and the thickness evenness may be saturated in some cases.

The lower limit of the heat fixation temperature in the TD is preferably 150°C, more preferably 160 °C, and even preferably 170 °C. If it is less than the above-mentioned temperature, thermal shrinkage becomes significant, and difference and shrinkage may be caused at the time of processing in some cases. The upper limit of the heat fixation temperature in the TD is preferably 250°C, more preferably 240 °C, even preferably 230 °C, and even more preferably 220 °C. If it exceeds the above-mentioned temperature, the film may be melted in some cases and additionally, even if not melted, the film may be fragile otherwise.

The lower limit of the relaxation ratio in the TD is preferably 0.5%, more preferably 1.0 %, even preferably 1.5 %, and even more preferably 2.0 %. If it is less than the above-mentioned ratio, rupture tends to be caused easily at the time of heat fixation. The upper limit of the relaxation ratio in the TD is preferably 10%, more preferably 9.0 %, even preferably 8.0 %, and even more preferably 7.0 %. If it exceeds the above-mentioned ratio, sagging may occur and it may result in thickness unevenness.

The lower limit of the thickness of the biaxially stretched polybutylene terephthalate film of the present invention is preferably 3 µm, more preferably 5 µm, and even preferably 8 µm. If the thickness is less than 3 µm, the strength as a film becomes insufficient in some cases. The upper limit of the film thickness is preferably 100 $\mu$m, more preferably 75 $\mu$m, and even preferably 50 $\mu$m. If it exceeds 100 $\mu$m, the thickness becomes too thick to make processing relevant to the aim of the present invention difficult in some cases.

When the biaxially stretched polybutylene terephthalate film of the present invention is measured by the dynamic viscoelasticity measurement at 10 Hz of measurement frequency, the peak temperature of tan $\delta$ in both the MD direction and the TD direction is 60 °C or more and 100 °C or less, preferably 65 °C or more and 95 °C or less, more preferably 69 °C or more and 90 °C or less, and even preferably 70 °C or more and 90 °C or less.

In addition, the peak value of tan $\delta$ in both the MD direction and the TD direction is 0.080 or more and 0.15 or less, preferably 0.085 or more and 0.14 or less, more preferably 0.090 or more and 0.13 or less, and most preferably 0.091 or more and 0.12 or less.

When the peak temperature of tan $\delta$ in the dynamic viscoelasticity measurement is less than 60 °C, and the peak value of tan $\delta$ is less than 0.080, the flexibility of the film becomes insufficient due to the deterioration of the resin, mono layer at the time of casting, and the decrease of the intrinsic viscosity, the pinhole resistance and the bag breakage resistance are lowered in some cases. In addition, when the peak value of tan $\delta$ is more than 0.15, the film becomes soft too much, the impact resistance and the bag breakage resistance are deteriorated in some cases. Further, when the peak temperature of tan $\delta$ is more than 100 °C, the film becomes hard too much, and the pinhole resistance and the bag breakage resistance are decreased in some cases.

The dynamic viscoelasticity measurement can be measured with a dynamic viscoelasticity measurement device manufactured by, for example, TA Instruments. JAPAN. The measurement conditions are as follows: 20 mm of measurement length, 0.25 % of displacement, 10 Hz of measurement frequency, 5 °C/minute of speed for increasing a temperature, a sample having length 40 mm x width 8 mm.

The lower limit of the plane orientation coefficient of the biaxially stretched polybutylene terephthalate film of the present invention is preferably 0.128, more preferably 0.129, even preferably 0.130, even more preferably 0.131, and particularly preferably 0.132. If it is less than the above values, the piercing strength, the impact strength, etc. may be lowered in some cases. The upper limit of the plane orientation coefficient is preferably 0.150, more preferably 0.149. If it exceeds 0.150, productivity is lowered and additionally, flexibility or the like may be lowered in some cases. The plane orientation coefficient can be adjusted to be within the above-mentioned range by adjusting the MD stretching ratio and the heat fixation temperature. As a stretching method, sequential stretching is more preferable than simultaneous stretching, and particularly sequential stretching by stretching the film in the MD direction and thereafter stretching the film in the TD direction is furthermore preferable.

The lower limit of the refractive index of the biaxially stretched polybutylene terephthalate film of the present invention in the thickness direction is preferably 1.490, more preferably 1.491, even preferably 1.492, and even more preferably 1.494. When the refractive index is less than the above value, the orientation of the film becomes high too much, the laminate strength between the film and the sealant is insufficient, so that the bag breakage resistance may be decreased.

The upper limit of the refractive index of the biaxially stretched polybutylene terephthalate film of the present invention in the thickness direction is preferably 1.540, more preferably 1.525, even preferably 1.520, even more preferably 1.510, particularly preferably 1.505, and most preferably 1.502. When the refractive index is more than the above value, the molecule orientation of the film is insufficient, and the mechanical property may be poor.

The lower limit of the intrinsic viscosity of the biaxially stretched polybutylene terephthalate film of the present invention is preferably 0.80 dl/g, more preferably 0.85 dl/g, even preferably 0.9 dl/g, particularly preferably 0.95 dl/g, and most preferably 1.0 dl/g. When the intrinsic viscosity is less than the above values, the piercing strength, the impact strength, and the bag breakage resistance are lowered in some cases.

The upper limit of the intrinsic viscosity of the biaxially stretched polybutylene terephthalate film of the present invention is preferably 1.2 dl/g, more preferably 1.19 dl/g, even preferably 1.18 dl/g, and even more preferably 1.17 dl/g. When the intrinsic viscosity is more than the above values, stress at the time of stretch becomes high, and the property for forming the film is deteriorated in some cases.

The biaxially stretched polybutylene terephthalate film of the present invention is preferable to have the same resin composition in the entire thickness direction of the film.

Another layer of another material may be layered on the biaxially stretched polybutylene terephthalate film of the present invention, and an example of a method for layering may be lamination after or during formation of the biaxially stretched polybutylene terephthalate film of the present invention.

The lower limit of the impact strength of the film of the present invention is preferably 0.050 J/$\mu$m, more preferably 0.055 J/$\mu$m, even preferably 0.058 J/$\mu$m, particularly preferably 0.060 J/$\mu$m, and most preferably 0.067 J/$\mu$m. When the value is less than the above, the strength for use as package may be poor.

The upper limit of the impact strength is preferably 0.2 J/$\mu$m, more preferably 0.15 J/$\mu$m, even preferably 0.12 J/$\mu$m, and even more preferably 0.10 J/$\mu$m. When the value is more than the above, effects for the improvement is saturated in some cases.

The lower limit of the thermal shrinkage at 150 °C in the MD direction and TD direction of the film of the present invention is preferably 0 %. When the value is less than the above, effect for improvement is saturated, and the film becomes brittle in the mechanical property.

The upper limit of the thermal shrinkage at 150 °C in the MD direction and TD direction of the film of the present invention is preferably 7.2 %, more preferably 7.0 %, even preferably 6.5 %, even more preferably 5.0 %, even more preferably 4.5 %, particularly preferably 4.3 %, and most preferably 4.2 %. When the value is more than the above, pitch deviation and the like may occur according to dimensional changes at the time of processing such as print.

The film of the present invention having film properties as set forth below can be used suitably for a package material, particularly, a retort pouch package and a moisture food package requiring the moisture proof property, the pinhole resistance, and the bag breakage resistance.

(Method for preparing biaxially stretched polybutylene terephthalate film)

The present invention may be a method for preparing biaxially stretched polybutylene terephthalate film comprising the steps of preparing a polyester resin composition, melting the polyester resin composition, malti-layering the melted polyester resin composition, casting the melted and multi-layered polyester resin composition, contacting the resin composition with the cooling roll to obtain an un-stretched sheet, stretching the un-stretched sheet to a machine direction and then a transverse direction, heat-fixing the stretched sheet, and relaxing the resulting sheet.

Particularly, the present invention encompasses a method for preparing a biaxially stretched polybutylene terephthalate film comprising multi-layering the polyester resin composition at 60 layers or more to cast the composition having multilayers as a sheet, and biaxially stretching a resultant un-stretched sheet. The method enables to decrease the degree and size of the crystallization of the polybutylene terephthalate. In the method, the stretch method for the biaxially stretched polybutylene terephthalate may be a sequential biaxial stretch method. The sequential biaxial stretch method can control the orientation of the molecule appropriately.

Concretely, as means for multi-layering the polyester resin composition at 60 layers or more, a mean of using a multi-layer feed block, a static mixer, a multi-layer multi-manifold and the like can be adopted. Among these, the static mixer is suitable in the viewpoint of the economy. Further, the static mixer to be used may have element of, for example, 1 or more and 50 or less, preferably 2 or more and 40 or less, more preferably 4 or more and 30 or less, and even preferably 6 or more and 25 or less. The layers divided with the static mixer are preferably 60 layers or more and 4000 layers or less, more preferably 100 layers or more and 3000 layers or less, and even preferably 200 layers or more and 2500 layers or less.

On casting the multi-layered polyester resin composition, the resin composition is casted with T die at the temperature of preferably 240 °C or more and 310 °C or less, more preferably 250 or more and 300 °C or less. At this time, it is preferable to obtain un-strethced sheet by lowering the degree and the size of crystallization of the polybutylene terephthalate using the electrostatic adhesion method with a chill roll.

Then, the film is subjected to a sequential biaxial stretch method, and it is important to carry out at a stretching ratio of preferably 2.5 times or more, more preferably 3.0 times or more in both directions such as the machine direction and the transverse direction. Here, the stretching ratio defined in the present invention means a stretching ratio in which the film is actually stretched. The stretching ratio can calculate by the ratio of mass change per unit area before and after each of stretch steps or by marking the magnification marker like grid pattern on the un-stretched sheet. When the stretching ratio in any of the machine direction or the transverse direction is less than 2.5 times, the plane orientation coefficient becomes lower too much, the original mechanical strength of the biaxially stretched film cannot be obtained, and further the thickness evenness of the film is remarkably deteriorated. The lower limit of the stretching ratio in the present invention is preferably 2.5 times, more preferably 3.0 times, and even preferably 3.3 times. In addition, the upper limit of the stretching ratio is preferably 5 times, more preferably 4.5 times, and particularly preferably 4.0 times. When the stretching ratio is more than 5 times, the plane orientation coefficient becomes higher.

In the case where polybutylene terephthalate or a copolymer thereof is used as a film raw material, the stretching temperature is preferably 40 °C or more and 100 °C or less. When the stretching temperature (highest temperature) is more than 100 °C, it is difficult to control the plane orientation coefficient to 0.128 or more or 0.130 or more, and the physical property specific to the biaxially stretched polybutylene terephthalate film cannot be obtained. Further, the evenness such as the thickness accuracy of the film is also lowered. On the other hand, when the stretching temperature (highest temperature) is less than 40 °C, it is difficult to evenly control the plane orientation coefficient to less than 0.150. The stretching temperature is preferably 45 °C or more and 95 °C or less, and more preferably 50 °C or more and 90 °C or less.

In addition, the heat fixation temperature of the film is preferably 150 °C or more and 250 °C or less, more preferably 160 °C or more and 240 °C or less. The thermally treating time is preferably 1 second or more and 100 seconds or less. When the thermal treatment is carried out at the higher temperature than 250 °C, the distortion of the oriented principal axis becomes large, so that the torsion, the deflection, and the planar distortion are increased at the time of heat treatment. In the case where the heat fixation temperature is less than 150 °C, the heat treatment becomes insufficient, so that the heat stability is deteriorated. Further, the relaxation treatment may be carried out in the machine direction and/or the transverse direction at the same time as the heat treatment or after the heat treatment.

The relaxation ratio of the film is preferably 0.5 % or more and 10 % or less, more preferably 1.0 % or more and 9 % or less, even preferably 1.5 % or more and 8 % or less, more even preferably 2.0 % or more and 8 % or less, and particularly preferably 2.0 % or more and 7 % or less. When the value is less than the above range, the breakage of the film easily occurs at the time of heat fixation. When the value is more than the above range, the surface waviness and the like occurs, so that thickness unevenness also occurs in some cases.

This application claims the benefit of priorities to Japanese Patent Application No. 2013-235370, filed on November 13, 2013 and Japanese Patent Application No. 2013-235371, filed on November 13, 2013. The entire contents of the specifications of Japanese Patent Application No. 2013-235370, filed on November 13, 2013 and Japanese Patent Application No. 2013-235371, filed on November 13, 2013 is incorporated herein by reference.

EXAMPLES

Next, the present invention will be described in detail with reference to Examples, but the present invention is not limited thereto, and the variation and the modification of the present invention without departing the gist described above and below are all included the technical scope of the present invention. The measurements of the film were carried out as follows.

film formability]

Film formability of a biaxially stretched polybutylene terephthalate film was evaluated according to the following standard. If marked with O and Δ, it was determined that productivity was good.

O: A film was formed without rupture and continuous production was possible.
Δ: Film formability was more or less unstable and rupture rarely occurred but continuous production was possible.
x: Rupture often occurred and continuous production was difficult.

[Maximum CA speed]

Each of resin compositions represented in Examples and Comparative Examples was extruded with T die to cast each of the extruded resin composition on the cooling roll. The speed of the cooling roll at casting was changed stepwise, pinner bubbles generated on the surface of un-stretched sheet were observed visually by using polarizing plate manufactured by Nishida Kogyo Co., Ltd., and the maximum casting speed in which the pinner bubbles were not generated was regarded as the maximum CA speed.

[Melt Specific Resistance]

A pair of electrode plates were inserted in a sample (tip or film) molten at a temperature of 265 °C and voltage of 120 V was applied. The electric current at that time was measured and the melt specific resistance Si ($\Omega \cdot$cm) was calculated according to the following expression:

$$Si = (A/I) \times (V/io)$$

wherein "A" represents surface area of the electrode ($cm^2$) ; "I" represents interval between the electrodes (cm); "V" represents voltage (V); and "io" represents electric current (A).

[Intrinsic Viscosity of Film]

Each sample was vacuum dried at 130 °C all day and all night and thereafter pulverized or cut, and 80 mg of the obtained sample was accurately weighed and heat-dissolved at 80 °C for 30 minutes in a mixed solution of phenol/tetrachloroethane = 60/40 (volume ratio). After the total volume was adjusted to 20 ml by the same mixed solution and the measurement was carried out at 30 °C.

[Thickness of film]

The thickness was measured by a method according to JIS-Z-1702.

[Dynamic Viscoelastic Test]

The dynamic viscoelastic property was measured by the dynamic viscoelasticity measurement device manufactured by TA Instruments Japan Inc.. The measured conditions were as follows: measurement length of 20mm, displacement of 0.25%, measurement frequency of 10 Hz, the speed for increasing temperature of 5 °C/minute. The sample was cut into the size of length 40 mm x width 8 mm to prepare a sample for the measurement. In addition, tan $\delta$ was calculated with the following expression.

$$\tan \delta = \text{imaginary parts of complex modulus / real parts of complex modulus } (= E'' \text{ (loss modulus) / } E' \text{ (storage modulus))}$$

[Refractive index of thickness direction]

The refractive index of the film was measured by using Abbe's refractometer together with 1-bromo naphthalene as a contact liquid according to JIS K7142 (2008) A method.

[Plane orientation coefficient]

Ten specimens were sampled from each rolled sample in the width direction. According to JIS K 7142-1996 5.1 (A method), refractive index in the longitudinal direction (nx), refractive index in the width direction (ny), and refractive index in the thickness direction (nz) were measured for each specimen by using sodium D-ray as a light source and Abbe's refractometer and the plane orientation coefficient ($\Delta P$) was calculated according to the following expression. The average value of the measured plane orientation coefficients was employed as the plane orientation coefficient.

$$\Delta P = (nx + ny)/2 - nz$$

[Impact strength]

The strength of each film in environments at 23°C against impact punching was measured by using an impact tester manufactured by TOYO SEIKI SEISAKU-SHO, LTD. The tester employed had impact sphere with diameter of 1/2 inch. The unit was [J/$\mu$m] .

[Thermal shrinkage]

The thermal shrinkage of each polyester film was measured by a dimensional change testing method described in JIS-C-2318, except that the testing temperature was at 150°C and the heating time was 15 minutes.

[Pinhole resistance]

Each film according to the present invention which was laminated with LLDPE sealant (manufactured by TOYOBO Co., Ltd., L4102, thickness 40 $\mu$m) under dry condition was cut in a size of 20.3 cm (8 inch) x 27.9 cm (11 inch) and the obtained rectangular test film after the cutting was left to stand in the condition of 23°C and 50% RH for 24 hours and thus conditioned. Thereafter, each rectangular test film was rolled into a cylindrical form with a length of 20.32cm (8 inch). One end of the cylindrical film was fixed in the outer circumference of a disk-like fixed head of a Gelbo flex tester (NO. 901 Model, manufactured by Rigaku Corporation) (according to the standard of MIL-B-131C) and the other end of the cylindrical film was fixed in the outer circumference of a disk-like movable head set on the opposite to the fixed head at 17.8 cm (7 inch) interval. A bending test was performed by continuously repeating 2000 cycles at 40 cycles/min, each of which was carried out by rotating the movable head at 440° while moving the movable head closer to the fixed bed by 7.6 cm (3.5 inch) along the axis between both heads set on the opposite to each other in parallel, successively moving the movable head forward by 6.4 cm (2.5 inch) without rotating the movable head, executing these movements reversely to turn the movable head back to the initial position. The test was performed at 5°C. Thereafter, the number of pinholes generated in the portion of the tested film of 17.8 cm(7 inch) x 27.9 cm (11 inch) excluding the parts fixed in the outer circumferences of the fixed head and the movable head was measured (that is, the number of pinholes generated in 497cm$^2$ (77 square inch) was measured). In addition, in the present invention, pinhole resistance can be regarded to be good in the case where the number of pinhole is 9 or less.

[Bag breakage resistance]

Each film according to the present invention which was laminated with LLDPE sealant (manufactured by TOYOBO Co., Ltd., L4102, thickness 40 $\mu$m) under dry condition was cut in a size of 15 cm square and two pieces were laminated such that the sealant was inside, three sides of the laminates were heat-sealed at the sealing temperature of 160 °C and seal width of 1.0 cm, to prepare a package which had inside dimensions of 13 cm and sealed in the three sides.
The package sealed in the three sides was charged with 250 mL of water, other one side was heat-sealed and closed to prepare a package sealed in the four sides and charged with water.
The package sealed in the four sides was dropped from the height of 100 cm on the concrete plate under circumstances of the temperature of 5 °C, humidity of 35 % R.H., to count the dropped number until the breach and the pinhole were generated. In the present invention, the bag breakage resistance can be regarded to be good in the case where the dropped number is 50 times or more.

[Example 1]

PBT (NOVADURAN 5020, melting point 220°C, manufactured by Mitsubishi Engineering-Plastics Corporation) as a polyester resin composition was mixed with a master batch containing calcium carbonate as a lubricant in a lubricant concentration of 2000 ppm by using a single screw extruder and melted at 295°C and the obtained melt line was introduced into a static mixer having 12 elements. Accordingly, the PBT melt body was separated and layered to obtain a multi-layer melt body made of a single raw material. The melt body was cast by a T-die at 295°C and closely stuck to a chill roll at 15°C by electrostatic adhesion method to obtain an un-stretched sheet. Successively, 3.3 times roll stretching was carried out at 60°C in the machine (vertical) direction and thereafter, 3.8 times stretching was carried out at 70°C in the transverse direction by leading the obtained sheet to a tenter and then the sheet was subject to the heat tension treatment at 185°C for 3 seconds and to relaxation treatment by 5.0 % for 1 second and both end parts were cut to give a PBT film with thickness of 12 $\mu$m. The film formation conditions, physical properties, and evaluation results of the obtained films are shown in Table 1. The film of Example 1 indicated the moisture proof property similar to PET.

(Examples 2 to 5)

The same processes as that in Example 1 were carried out except that the raw material composition and the film formation conditions were changed as described in Table 1. The film formation conditions, the physical properties and the evaluation results of the obtained film are shown in Table 1. Here, the films of Example 2 to 5 exhibited the moisture proof property similar to PET. (ecoflex: polybutylene adipate-butylene terephthalate copolymer, manufactured by BASF)

[Table 1]

| Item | | | Unit | Example 1 | Example 2 | Example 3 | Example 4 | Example 5 |
|---|---|---|---|---|---|---|---|---|
| Polyester resin composition | PBT | | - | PBT | PBT | PBT | PBT | PBT |
| | | | % by mass | 100 | 100 | 100 | 100 | 70 |
| | Polyester resin other than PBT | | - | - | - | - | - | ecoflex |
| | | | % by mass | | | | | 30 |
| | Lubricant | | - | calcium carbonate | calcium carbonate | calcium carbonate | calcium carbonate | calcium carbonate |
| | | | concentration | 2000ppm | 2000ppm | 2000ppm | 2000ppm | 2000ppm |
| Film formation condition | Temperature of Extruder | | °C | 295 | 260 | 265 | 265 | 265 |
| | Presence or absence of Multi-layers at melting state of polyester resin composition | | - | Presence | Presence | Presence | Presence | Presence |
| | Number of elements of static mixer | | pieces | 12 | 12 | 12 | 12 | 12 |
| | Number of layers (theoretical value) | | pieces | 2048 | 2048 | 2048 | 2048 | 2048 |
| | Chill roll temperature | | °C | 15 | 15 | 15 | 15 | 15 |
| | Order of stretch | | - | MD-TD | MD-TD | MD-TD | MD-TD | MD-TD |
| | Stretching temperature in MD | | °C | 60 | 60 | 60 | 60 | 60 |
| | Stretching ratio in MD | | times | 3.3 | 3.3 | 3.7 | 3.7 | 3.7 |
| | Stretching temperature in TD | | °C | 70 | 70 | 70 | 70 | 70 |
| | Stretching ratio in TD | | times | 3.8 | 3.8 | 4.0 | 4.0 | 4.0 |
| | Heat fixation temperature | | °C | 185 | 200 | 190 | 220 | 220 |
| | Relaxation ratio | | % | 5.0 | 5.0 | 5.0 | 5.0 | 5.0 |
| | Film formability | | - | ○ | ○ | ○ | ○ | ○ |
| | Film thickness | | μm | 12 | 20 | 12 | 12 | 12 |
| | intrinsic viscosity of film | | dl/g | 0.85 | 1.13 | 1.01 | 1.02 | 097 |

(continued)

| Item | | | | Unit | Example | | | | |
|---|---|---|---|---|---|---|---|---|---|
| | | | | | 1 | 2 | 3 | 4 | 5 |
| Physical property | Dynamic viscoelasticity measurement | tan δ peak temperature | MD | °C | 82 | 79 | 73 | 72 | 76 |
| | | | TD | °C | 81 | 79 | 70 | 70 | 74 |
| | | tan δ peak value | MD | - | 0.135 | 0.129 | 0.100 | 0.090 | 0.120 |
| | | | TD | | 0.130 | 0.128 | 0.098 | 0.088 | 0.114 |
| | Refractive Index in thickness direction | | | - | 1.530 | 1.520 | 1.490 | 1.502 | 1.492 |
| | Plane orientation coefficient | | | - | 0.128 | 0129 | 0.148 | 0.132 | 0.142 |
| | Impact strength | | | J/μm | 0.052 | 0.058 | 0.090 | 0.080 | 0.075 |
| | Thermal shrinkage of film in MD at 150 °C | | | % | 4.10 | 4.05 | 6.20 | 0.11 | 2.30 |
| | Thermal shrinkage of film in TD at 150 °C | | | % | 4.20 | 4.12 | 7.10 | 0.95 | 2.27 |
| | Pinhole resistance | | | number | 2 | 0 | 1 | 9 | 1 |
| | Bag breakage resistance | | | times | 52 | 62 | 62 | 193 | 120 |

[Comparative Examples 1 to 5]

Each of films of Comparative Examples 1 to 5 was obtained by using a uniaxial extruder based on conditions of Table 2. The film formation conditions, the physical properties and the evaluation results of the obtained film are shown in Table 2.

[Comparative Example 6]

A film was obtained based on conditions of Table 2 using a commercially available PBT film manufactured by Kansai Chemicals Co., Ltd as a representative biaxially stretched PBT film which was subjected to inflation. The film formation conditions, the physical properties and the evaluation results of the obtained film are shown in Table 2.

[Comparative Example 7]

Comparative Example 7 was carried out as in the same manner as Example 1 except that ester film E5100-12 μm manufactured by TOYOBO Co. Ltd. was used as a polyester resin (PET resin). The physical properties and the evaluation results of the obtained film are shown in Table 2.

[Table 2]

| Item | | | Unit | Comparative Example | | | | | | |
|---|---|---|---|---|---|---|---|---|---|---|
| | | | | 1 | 2 | 3 | 4 | 5 | 6 | 7 |
| Polyesterresin composition | PBT | | - | PBT | PBT | PBT | PBT | PBT | PBT | PET manufactured by TOYOBO Co., Ltd E5100 |
| | | | % by mass | 100 | 100 | 100 | 40 | 40 | 100 | |
| | Polyester resin other than PBT | | - | - | - | - | ecoflex | PET | - | |
| | | | % by mass | - | - | - | 60 | 60 | - | |
| | Lubricant | | - | calcium carbonate | calcium carbonate | calcium carbonate | calcium cabonate | calcium carbonate | calcium carbonate | - |
| | | | concentration | 2000ppm | 2000ppm | 2000ppm | 2000pom | 2000ppm | 2000ppm | - |
| Film formation condition | Temperature of Extruder | | °C | 270 | 305 | 250 | 265 | 265 | inflation film formation | - |
| | Presence or absence of Multi-layers at melting state polyester resin composition | | - | Absence | Presence | Absence | Presence | Presence | | |
| | Number of elements of static mixer | | pieces | - | 12 | - | 12 | 12 | | |
| | Number of layers (theoretical value) | | pieces | - | 2048 | - | 2048 | 2048 | | |
| | Chil roll temperature | | °C | 15 | 20 | 30 | 15 | 15 | | |
| | Order of stretch | | - | MD-TD | MD-TD | TD-MD | MD-TD | MD-TD | | |
| | Streching temperature in MD | | °C | 60 | 60 | 90 | 60 | 60 | | |
| | Stretching ratio in MD | | times | 3.5 | 3.7 | 4.5 | 3.7 | 3.7 | | |
| | Stretching temperature inTD | | °C | 70 | 70 | 60 | 70 | 70 | | |
| | Stretching ratio in TD | | times | 4.0 | 4.0 | 24 | 4.0 | 4.0 | | |
| | Heat fixation temperature | | °C | 200 | 185 | 200 | 200 | 200 | | |
| | Relaxation ratio | | % | 5.0 | 5.0 | - | 5.0 | 5.0 | | |
| | Film formability | | - | x | O | Δ | O | O | | |
| | Film thickness | | μm | - | 12 | 12 | 12 | 12 | 15 | 12 |
| | Intrinsic viscosity of film | | dl/g | - | 0.75 | 0.83 | 0.82 | 0.73 | - | 0.58 |

EP 3 069 849 A1

18

(continued)

| Item | | | | Unit | Comparative Example | | | | | | |
|---|---|---|---|---|---|---|---|---|---|---|---|
| | | | | | 1 | 2 | 3 | 4 | 5 | 6 | 7 |
| Physical property | Dynamic viscoelasticty measurement | tan δ peek temperature | MD | °C | - | 65 | 58 | 55 | 85 | 58 | 118 |
| | | | TD | °C | - | 63 | 57 | 52 | 86 | 58 | 117 |
| | | tan δ peak value | MD | - | - | 0.080 | 0.060 | 0.110 | 0.080 | 0.070 | 0.140 |
| | | | TD | - | - | 0.076 | 0.058 | 0.110 | 0.078 | 0.071 | 0.138 |
| | Refractive index in thickness direction | | | - | - | 1.491 | 1.549 | 1.492 | 1.490 | - | 1.494 |
| | Plane orientation coefficeint | | | - | - | 0.141 | 0.120 | 0.132 | 0.142 | - | 0.160 |
| | Impact strength | | | J/μm | - | 0.042 | 0.027 | 0.045 | 0.041 | 0.031 | 0.042 |
| | Thermal shrinkage of film in MD at 150 °C | | | % | - | 250 | 4.20 | 3.20 | 3.10 | 0.70 | 1.40 |
| | Thermal shrinkage of film in TD at 150 °C | | | % | - | 1.50 | 4.60 | 3.31 | 3.22 | 0.60 | 0.20 |
| | Pinhole resistance | | | number | - | 11 | 8 | 1 | 25 | 1 | 30 |
| | Bag breakage resistance | | | times | - | 5 | 2 | 12 | 2 | 8 | 1 |

EP 3 069 849 A1

[Example 6]

(Preparation of polyester resin having improved electrostatic adhasion)

The temperature of an esterification reactor was raised, and when it reached 200°C, a slurry comprising 86.4 parts by mass of terephtalic acid and 64.4 parts by mass of ethylene glycol was charged, and as catalysts, 0.025 parts by mass of antimony trioxide and 0.16 parts by mass of triethylamine were added thereto with stirring. Subsequently, the temperature was raised with pressure, and under the conditions of a gauge pressure of 0.34 MPa and 240°C, an esterification reaction was conducted under pressure. Thereafter, the air inside of the esterification reactor was returned to atmospheric pressure, and 0.34 parts by mass of magnesium acetate tetrahydrate, then 0.042 parts by mass of trimethyl phosphate were added thereto. Furthermore, the temperature was raised up to 260°C over 15 minutes, 0.036 parts by mass of trimethyl phosphate, then 0.0036 parts by mass of sodium acetate were added thereto. The resulting esterification reaction product was transferred to a polycondensation reactor, and the temperature was gradually raised from 260°C to 280°C under reduced pressure, then a polycondensation reaction was carried out at 285°C. After completion of the polycondensation reaction, a filtration treatment was conducted using a filter made of stainless steel sintered body where a 95%-cut radius was 5 $\mu$m as initial filtration efficiency, and the polycondensation reaction product was pelleted to obtain PET resin having the mass ratio of alkaline earth metal atom (M2) to phosphorus atom (P) (M2/P) of 2.24 (Mg/P=385ppm/172ppm). The resulting PET resin was referred to as PET 1.

[Preparation of Film]

PBT (NOVADURAN 5020, melting point 220°C, manufactured by Mitsubishi Engineering-Plastics Corporation) as a polyester resin composition in the amount of 99 % by mass was mixed with PET 1 in the amount of 1 % by mass by using a single screw extruder and melted at 295°C and the obtained melt line was introduced into a static mixer having 12 elements. Accordingly, the PBT melt body was separated and layered to obtain a multi-layer melt body made of a single raw material. The melt body was cast by a T-die at 265°C and closely stuck to a chill roll at 15°C by electrostatic adhesion method to obtain an un-stretched sheet. Successively, 3.3 times roll stretching was carried out at 60°C in the machine (vertical) direction and thereafter, 3.8 times stretching was carried out at 70°C in the transverse direction % by leading the obtained sheet to a tenter and then the sheet was subject to the heat tension treatment at 185°C for 3 seconds and to relaxation treatment by 5.0 % for 1 second and both end parts were cut to give a PBT film with thickness of 12 $\mu$m. The film formation conditions, physical properties, and evaluation results of the obtained films are shown in Table 3.

[Examples 7 to 9]

Examples 7 to 9 were carried out as in the same manner as Example 6 except that the raw material composition and the condition of forming film were changed to a biaxially stretched film described in Table 3. The film formation conditions, physical properties, and evaluation results of the obtained films are shown in Table 3.
(ecoflex: polybutylene adipate-butylene terephthalate copolymer, manufactured by BASF)

[Table 3]

| Item | | Unit | Example 6 | Example 7 | Example 8 | Example 9 |
|---|---|---|---|---|---|---|
| Polyester resin composition | PBT | - | PBT | PBT | PBT | PBT |
| | | % by mass | 99 | 90 | 90 | 60 |
| | Polyester resin other than PBT | - | - | - | - | ecoflex |
| | | % by mass | - | - | - | 30 |
| | Polyester resin other than PBT | - | PET1 | PET1 | PET1 | PET1 |
| | | % by mass | 1 | 10 | 10 | 10 |
| | M2/P mass ratio | - | 224 | 224 | 224 | 224 |
| Fim formation condition | Temperature of Extruder | °C | 265 | 265 | 265 | 265 |
| | Presence or absence of Multi-layers at melting state of polyester resin | - | Presence | Presence | Presence | Presence |
| | Number of elements of static mixer | pieces | 12 | 12 | 12 | 12 |
| | Number of layers (theoretical value) | pieces | 2048 | 2048 | 2048 | 2048 |
| | Chill roll temperature | °C | 15 | 15 | 15 | 15 |
| | Stretching temperature in MD | °C | 60 | 60 | 60 | 60 |
| | Stretching ratio in MD | times | 3.7 | 3.7 | 3.9 | 3.7 |
| | Stretching temperature in TD | °C | 70 | 70 | 70 | 70 |
| | Stretching ratio in TD | times | 3.8 | 4.0 | 3.9 | 4.0 |
| | Heat fixation temperature | °C | 185 | 220 | 220 | 220 |
| | Relation ratio | % | 5.0 | 5.0 | 5.0 | 5.0 |
| | Film formabity | - | ○ | ○ | ○ | ○ |
| | Film thickness | μm | 12 | 12 | 25 | 12 |
| | Melt specific resistance of film | ×10$^8$ Ω·cm | 0.80 | 0.175 | 0.175 | 0.16 |

(continued)

| Item | | | | Unit | Example | | | |
|---|---|---|---|---|---|---|---|---|
| | | | | | 6 | 7 | 8 | 9 |
| Physical property | Dynamic viscoelasticity measurement | tan δ peak temperature | MD | °C | 73 | 73 | 70 | 76 |
| | | | TD | °C | 69.8 | 70 | 70.2 | 74 |
| | | tan δ peak value | MD | - | 0.100 | 0.100 | 0.091 | 0.120 |
| | | | TD | - | 0.095 | 0.098 | 0.092 | 0.114 |
| | Refractive Index in thickness direction | | | - | 1.492 | 1.502 | 1.500 | 1.492 |
| | Plane orientation coefficient | | | - | 0.148 | 0.132 | 0.134 | 0.142 |
| | Maximum CAspeed | | | m/min | 29.6 | 45.7 | 45.7 | 46.9 |
| | Film formation speed | | | m/min | 110 | 169 | 178 | 174 |
| | Impact strength | | | J/μm | 0.081 | 0.080 | 0.079 | 0.075 |
| | Thermal shrinkage of film in MD at 150 °C | | | % | 4.10 | 0.11 | 0.14 | 2.30 |
| | Thermal shrinkage of film in MD at 150 °C | | | % | 4.20 | 0.95 | 0.88 | 2.27 |
| | Pinhole resistance | | | number | 2 | 8 | 9 | 1 |
| | Bag breakage resistance | | | times | 52 | 193 | 219 | 120 |

[Comparative Examples 8 to 11]

(Preparation of polyethylene terephtalate resin)

The temperature of an esterification reactor was raised, and when it reached 200°C, a slurry comprising 86.4 parts by mass of terephtalic acid and 64.4 parts by mass of ethylene glycol was charged, and as catalysts, 0.025 parts by mass of antimony trioxide and 0.16 parts by mass of triethylamine were added thereto with stirring. Subsequently, the temperature was raised with pressure, and under the conditions of a gauge pressure of 0.34 MPa and 240°C, an esterification reaction was conducted under pressure. The resulting esterification reaction product was transferred to a polycondensation reactor, and the temperature was gradually raised from 260°C to 280°C under reduced pressure, then a polycondensation reaction was carried out at 285°C. After completion of the polycondensation reaction, a filtration treatment was conducted using a filter made of stainless steel sintered body where a 95%-cut radius was 5 $\mu$m as initial filtration efficiency, and the polycondensation reaction product was pelleted to obtain PET resin having the intrinsic viscosity of 0.62 dl/g. The resulting PET resin was referred to as PET 2.

[Preparation of Film]

Each of films of Comparative Examples 8 to 11 was obtained by using a uniaxial extruder based on conditions of Table 4. The film formation conditions, the physical properties and the evaluation results of the obtained film are shown in Table 4.

[Comparative Example 12]

A film was obtained based on conditions of Table 4 by using ester film E5100-12 $\mu$m manufactured by TOYOBO Co. Ltd. as a polyester resin (PET resin). The physical properties and the evaluation results of the obtained film are shown in Table 4.

[Table 4]

| Item | | | Unit | Comparative Example | | | | |
|---|---|---|---|---|---|---|---|---|
| | | | | 8 | 9 | 10 | 11 | 12 |
| Polyster resin composition | PBT | | - | PBT | PBT | PBT | PBT | PET manufactured % by TOYOBO Co., Ltd E5100 |
| | | | % by mass | 100 | 100 | 50 | 40 | |
| | Popster resin other than PBT | | - | - | - | ecoflex | PET2 | |
| | | | % by mass | - | - | 50 | 60 | |
| | Polyester resin other than PBT | | - | - | - | - | - | |
| | | | % by mass | - | - | - | - | |
| | M2/P mass ratio | | - | - | - | - | - | - |
| Film formation condition | Temperature of Extruder | | °C | 265 | 265 | 265 | 265 | |
| | Presence or absence of Multi-layers at meting state of polyester resin composition | | - | absence | Presence | Presence | Presence | |
| | Number of elements of static mixer | | pieces | - | 12 | 12 | 12 | |
| | Number of layers (theoretical value) | | pieces | - | 2048 | 2048 | 2048 | |
| | Chil roll temperature | | °C | 15 | 15 | 15 | 15 | - |
| | Stretching temperature in MD | | °C | 60 | 60 | 60 | 60 | |
| | Sftretching ration in MD | | times | 3.5 | 3.7 | 3.7 | 3.7 | |
| | Stretching temperature in TD | | °C | 70 | 70 | 70 | 70 | |
| | Stretching ration in TD | | times | 4.0 | 4.0 | 4.0 | 4.0 | |
| | Heat fixation temperature | | °C | 200 | 220 | 200 | 200 | |
| | Relaxation ratio | | % | 5.0 | 5.0 | 5.0 | 5.0 | |
| | Film formability | | - | × | ○ | ○ | ○ | |
| | Film thickness | | μm | - | 12 | 12 | 12 | 12 |
| | Melt specific resistance of film | | ×10$^8$ Ω·cm | - | 220 | 0.49 | 0.34 | 023 |

EP 3 069 849 A1

(continued)

| Item | | | | Unit | Comparative Example | | | | |
|---|---|---|---|---|---|---|---|---|---|
| | | | | | 8 | 9 | 10 | 11 | 12 |
| Physical property | Dynamic viscoelasticity measuement | tan δ peak temperature | MD | °C | - | 65 | 55 | 85 | 118 |
| | | | TD | °C | - | 63 | 52 | 86 | 117 |
| | | tan δ peak value | MD | - | - | - | 0.080 | 0.099 | 0.080 | 0.140 |
| | | | TD | - | - | - | 0.076 | 0.100 | 0.078 | 0.138 |
| | Refractive Index in thickness direction | | | - | - | 1.502 | 1.492 | 1.490 | 1.494 |
| | Plane orientation coefficient | | | - | - | 0.132 | 0.132 | 0.142 | 0.160 |
| | Maximum CAspeed | | | m/min | 22 | 22 | 34 | 37.8 | - |
| | Film formation speed | | | m/min | - | 81 | 126 | 140 | - |
| | Impact strength | | | J/μm | - | 0.080 | 0.045 | 0.041 | 0.042 |
| | Thermal shrinkage of film in MD at 150 °C | | | % | - | 0.11 | 320 | 3.10 | 1.40 |
| | Thermal shrinkage of film in TD at 150 °C | | | % | - | 0.96 | 3.31 | 322 | 0.20 |
| | Pinhole resistance | | | number | - | 9 | 1 | 25 | 30 |
| | Bag breakage resistance | | | times | - | 193 | 12 | 2 | 1 |

According to Examples 6 to 9, by adjusting the melt specific resistance of the film to $1.0 \times 10^8$ Q • cm or less, a biaxially stretched polybutylene terephthalate films having no generation of pinner bubble and good appearance level were obtained even at higher speed of the film formation. In addition, these films had excellent impact resistance, pinhole resistance, and bag breakage resistance.

On the contrary, when the melt specific resistance of the film is more than $1.0 \times 10^8$ $\Omega$ • cm like Comparative Example 9, pinner bubble was generated even if the speed at casting was lower, so that a film having excellent appearance level cannot be obtained in the case where the speed for the film formation was made to be higher.

INDUSTRIAL APPLICABILITY

The present invention enables to prepare a biaxially stretched polybutylene terephthalate film having excellent productivity and thickness accuracy of PBT, which conventionally has been difficult, by a sequentially biaxially stretched method. In addition, according to the present invention, the biaxially stretched polybutylene terephthalate film having excellent moisture proof property, pinhole resistance, and bag breakage resistance, particularly suitable applications such as a retort pouch package and a moisture food package can be obtained, to expect to largely contribute to an industrial field.

In addition, according to the present invention, the biaxially stretched polybutylene terephthalate film having excellent balance of the impact resistance, the flexibility, the physical strength in addition to the sufficient appearance level of the film even at higher speed for the film formation, further more excellent water proof property than that of nylon film, and suitable applications such as converting film, films for food package, drawing films in which nylon films or other soft films have been used conventionally, can be obtained, to expect to greatly contribute to an industrial field.

**Claims**

1. A biaxially stretched polybutylene terephthalate film comprising a polyester resin composition containing 60 % by mass or more of polybutylene terephthalate, wherein a peak temperature of tan $\delta$ as determined by the dynamic viscoelasticity measurement at 10 Hz of measurement frequency is 60 °C or more and 100 °C or less in both the MD direction and the TD direction, and a peak value of tan 5 is 0.080 or more and 0.15 or less in both the MD direction and the TD direction.

2. A biaxially stretched polybutylene terephthalate film comprising a polyester resin composition containing 60 % by mass or more of polybutylene terephthalate, wherein a melt specific resistance of the film is $0.10 \times 10^8$ $\Omega$•cm or more and $1.0 \times 10^8$ $\Omega$•cm or less, a peak temperature of tan $\delta$ as determined by the dynamic viscoelasticity measurement at 10 Hz of measurement frequency is 60 °C or more and 100 °C or less in both the MD direction and the TD direction, and a peak value of tan $\delta$ is 0.080 or more and 0.15 or less in both the MD direction and the TD direction.

3. The biaxially stretched polybutylene terephthalate film according to claim 1 or 2, wherein the refractive index of the film in the thickness direction is 1.490 or more and less than 1.540, and the plane orientation coefficient is 0.128 or more and less than 0.150.

4. The biaxially stretched polybutylene terephthalate film according to claim 3, wherein the refractive index of the film in the thickness direction is 1.490 or more and less than 1.510, and the plane orientation coefficient is 0.130 or more and less than 0.150.

5. The biaxially stretched polybutylene terephthalate film according to any one of claims 1 to 4, wherein the thermal shrinkage of the film at 150 °C in the MD direction and the TD direction is 7.2 % or less.

6. The biaxially stretched polybutylene terephthalate film according to any one of claims 1 to 5, wherein the polyester resin composition comprises a polyester resin other than polybutylene terephthalate.

7. The biaxially stretched polybutylene terephthalate film according to any one of claims 1 to 6, wherein the intrinsic viscosity of the film is 0.80 dl/g or more and less than 1.2 dl/g.

8. The biaxially stretched polybutylene terephthalate film according to any one of claims 1 to 7, wherein the film comprises an alkaline earth metal compound and a phosphorus compound, and the mass ratio (M2/P) of alkaline earth metal atom (M2) to phosphorus atom (P) is 1.2 or more and 5.0 or less.

9. The biaxially stretched polybutylene terephthalate film according to any one of claims 1 to 8, wherein the film is obtained by sequentially biaxially streatching an un-stretched sheet.

10. A method for preparing a biaxially stretched polybutylene terephthalate film according to any one of claims 1 to 9, wherein the film is obtained by multi-layering the polyester resin composition at 60 layers or more to cast the composition having multilayers as a sheet, and biaxially stretching a resultant un-stretched sheet.

11. The method for preparing a biaxially stretched polybutylene terephthalate film according to claim 10, wherein the film is obtained by sequentially biaxially stretching an un-stretched sheet.

## INTERNATIONAL SEARCH REPORT

| | International application No. |
|---|---|
| | PCT/JP2014/062839 |

**A. CLASSIFICATION OF SUBJECT MATTER**
*B29C55/14*(2006.01)i, *C08J5/18*(2006.01)i, *B29K67/00*(2006.01)n, *B29L7/00* (2006.01)n, *B29L9/00*(2006.01)n

According to International Patent Classification (IPC) or to both national classification and IPC

**B. FIELDS SEARCHED**

Minimum documentation searched (classification system followed by classification symbols)
B29C55/14, C08J5/18, B29K67/00, B29L7/00, B29L9/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-288283 A  (Toyobo Co., Ltd.), 16 October 2001 (16.10.2001), paragraphs [0009] to [0064] & US 2001/0014729 A1    & EP 1120352 A2 & DE 60128497 D        & AT 362954 T & KR 10-2001-0078083 A | 1-11 |
| A | JP 2005-105048 A  (Denki Kagaku Kogyo Kabushiki Kaisha), 21 April 2005 (21.04.2005), paragraphs [0011] to [0131] (Family: none) | 1-11 |
| A | JP 2005-232435 A  (Mitsubishi Plastics, Inc.), 02 September 2005 (02.09.2005), paragraphs [0009] to [0080]; fig. 1 & GB 2425127 A            & WO 2005/063887 A1 | 1-11 |

☐ Further documents are listed in the continuation of Box C.          ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 23 July, 2014 (23.07.14) | 05 August, 2014 (05.08.14) |

| Name and mailing address of the ISA/ Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012077292 A
- JP HEI216029 A
- JP HEI5200860 A
- JP 2012146636 A
- JP SHO51146572 A
- JP SHO5964628 A
- JP 4734973 B
- JP 2013235370 A
- JP 2013235371 A